**Europäisches Patentamt**

**European Patent Office**

(19)

**Office européen des brevets**

(11) Veröffentlichungsnummer : **0 285 019 B1**

(12) # EUROPÄISCHE PATENTSCHRIFT

(45) Veröffentlichungstag der Patentschrift :
17.04.91 Patentblatt 91/16

(51) Int. Cl.⁵ : **C25B 11/03, H01M 4/86**

(21) Anmeldenummer : **88104816.9**

(22) Anmeldetag : **25.03.88**

(54) **Poröse Gaselektrode.**

(30) Priorität : **01.04.87 DE 3710855**

(43) Veröffentlichungstag der Anmeldung :
**05.10.88 Patentblatt 88/40**

(45) Bekanntmachung des Hinweises auf die
Patenterteilung :
**17.04.91 Patentblatt 91/16**

(84) Benannte Vertragsstaaten :
**AT BE CH DE ES FR GB IT LI NL SE**

(56) Entgegenhaltungen :
**EP-A- 0 044 035**
**EP-A- 0 144 002**
**WO-A-85/01072**

(73) Patentinhaber : **HOECHST**
**AKTIENGESELLSCHAFT**
**Postfach 80 03 20**
**W-6230 Frankfurt am Main 80 (DE)**

(72) Erfinder : **Staab, Rudolf, Dr.**
**Eichkopfallee 107**
**W-6237 Liederbach (DE)**
Erfinder : **Russow, Jürgen, Dr.**
**Am Schieferberg 45**
**W-6233 Kelkheim (Taunus) (DE)**
Erfinder : **Medic, Nikolaj**
**Johann-Strauss-Strasse 18**
**W-6233 Kelkheim (Taunus) (DE)**

## Beschreibung

Gegenstand der Erfindung ist eine poröse Gaselektrode mit elektrokatalytisch wirkensamem Teil bestehend aus einem Nickeldrahtnetz, das mindestens auf einer Seite von einem Gemisch aus Raney-Nickel und Polytetrafluorethylen bedeckt ist.

Aus der EP-A-0 044 035 ist eine Elektrode bekannt, bei der auf einem Nickeldrahtgewebe eine Mischung aus einem Fluorpolymeren und Raney-Nickel aufgebracht ist. Das Gewebe stützt sich auf einem netzartigen Trägermaterial ab.

Die in der EP-A-0 144 002 beschriebene poröse Gaselektrode für die Wasserstoffentwicklung im alkalischen Medium, bei der eine Mischung aus PTFE und Raney-Nickel auf ein Nickeldrahtnetz aufgebracht ist, zeichnet sich durch besonders vorteilhafte Eigenschaften aus : Sie ist sehr kostengünstig herzustellen und sie besitzt unter den Bedingungen der technischen Elektrolyse – Stromdichte : 3 kA/m² ; Elektrolytkonzentration: 35 Gew.-% Natriumhydroxid ; Temperatur 85°C – eine hohe Lebensdauer als wasserstoffentwickelnde Kathode, d. h. das Elektrodenpotential ändert sich bei einer Laufzeit von über 3 Jahren im Rahmen der Meßgenauigkeit nicht. Infolge der speziellen folienartigen Struktur der Elektrode muß das elektrochemische Zellsystem (Brennstoffzelle oder Elektrolysezelle), in dem diese Elektrode eingesetzt werden soll, dieser speziellen Struktur genau angepaßt sein, um die Elektrode grundsätzlich und unter optimalen Bedingungen betreiben zu können. Derzeit ist es jedoch nicht möglich, solche Elektrodenstrukturen in Breiten von 1 m und breiter zu fertigen, während es problemlos ist, Bänder bis ca. 200 mm Breite in beliebiger Länge herzustellen. Da die Elektroden nicht formstabil sind, genügt es nicht, die Elektrodenbänder am Rahmen der Zelle zu befestigen, weil ein gleichmäßiger und optimaler Abstand zu der den Elektrodenraum begrenzenden Membram nicht gewährleistet werden kann. Darüber hinaus ist die Eigenleitfähigkeit dieser Elektroden so gering, daß bei den geforderten technischen Stromdichten und bei dem weiten Abstand zu dem stromführenden Rahmen der Spannungsabfall innerhalb der Elektrode von der Mitte bis zum Rand untragbar hoch wird. Aufgabe der vorliegenden Erfindung ist es, für diese folienartigen Elektrodenbänder eine Elektrodenkonstruktion zu entwickeln, die es erlaubt, diese Elektroden als Kathoden in Membranzellen, wie sie heute in der industriellen Technik üblich sind, mit deutlichen Vorteilen gegenüber den jetzt verwendeten Kathoden einzusetzen.

Die Aufgabe wird durch eine poröse Gaselektrode gelöst, die dadurch gekennzeichnet ist, daß der elektrokatalytisch wirksame Teil aus Bändern besteht, die parallel und im Abstand zueinander auf einem elektrischen Strom leitenden Stützgerüst angeordnet sind, das Stützgerüst aus einem Rahmen besteht, der ein Gitter begrenzt, und das Gitter aus parallel angeordneten Streben besteht, deren Abstand zueinander höchstens 200 mm, vorzugsweise 100 bis 150 mm beträgt. Dabei kann der elektrokatalytisch wirksame Teil aus Bändern bis zu 200 mm Breite bestehen. Das Gitter kann aus Streckmetall, vorzugsweise gewalztem Streckmetall, mit mindestens 60% offener Fläche bestehen.

Die Vorteile dieser porösen Gaselektrode bestehen darin, daß die elektrokatalytisch wirksamen Teile in optimalem Abstand gegenüber der Membram fixiert und gleichzeitig mit der Stützkonstruktion elektrisch leitend so verbunden werden können, daß innerhalb der Gaselektrode kein meßbarer Spannungsabfall auftritt. Die poröse Gaselektrode hat ferner den Vorteil, daß der freie Abzug der Gasblasen aus dem Raum zwischen Membran und Elektrode gefördert wird.

Im folgenden wird die Erfindung anhand von lediglich einen Ausführungsweg darstellenden Zeichnungen und Beispielen näher erläutert. Es zeigt

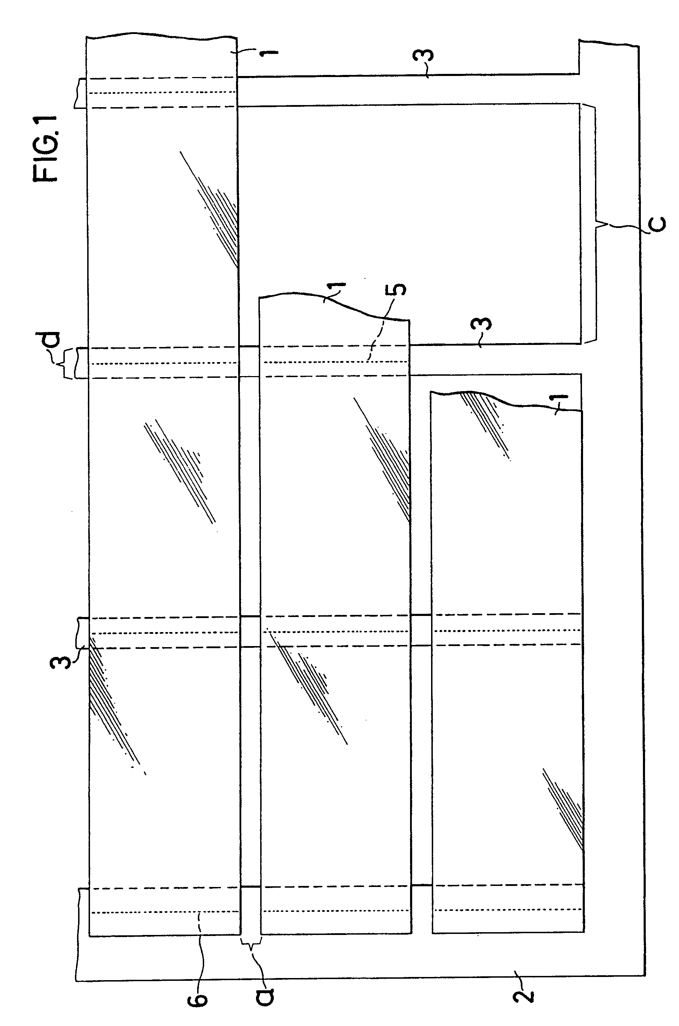

Figur 1 einen Ausschnitt einer porösen Gaselektrode, beider das Gitter aus Stäben besteht ;

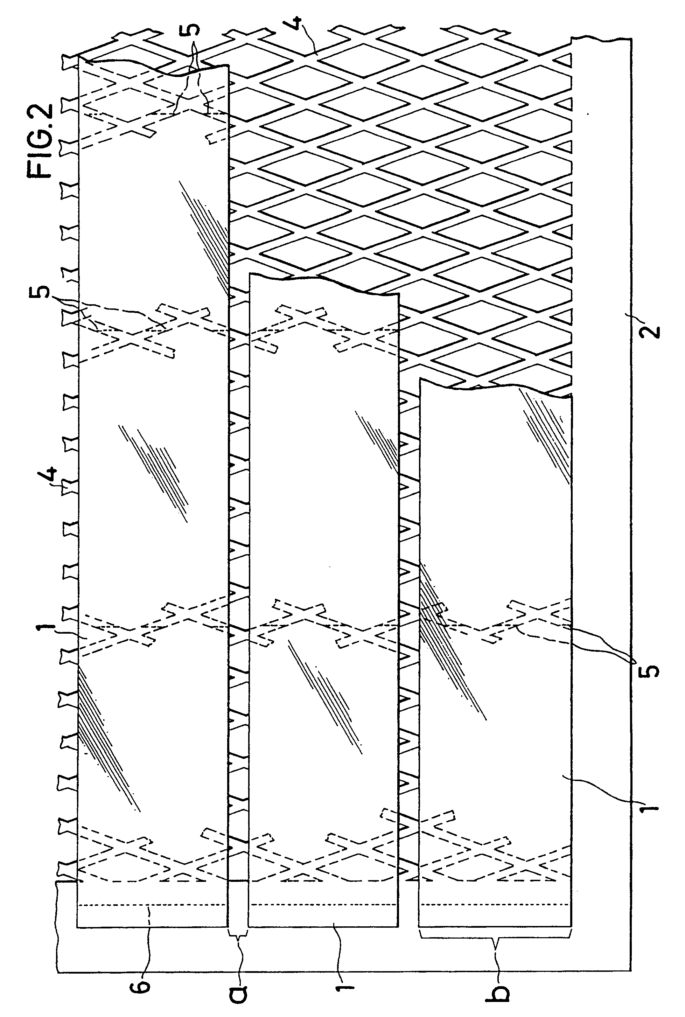

Figur 2 einen Ausschnitt einer porösen Gaselektrode, bei der das Gitter aus flachgewalztem Streckmetall besteht ;
Figur 3 die Spannung als Funktion der Stromdichte bei unterschiedlicher Breite der Bänder.

Der elektrokatalytisch wirksame Teil, die Bänder 1 der porösen Gaselektrode sind durch Schweißverbindungen elektrisch leitend mit einem elektrischen Strom leitenden Stützgerüst verbunden. Das Stützgerüst besteht aus einem Rahmen 2 und einem von diesem begrenzten Gitter. Das Gitter kann aus Stäben 3 bestehen, deren Breite d 5 bis 20 mm betragen kann und die parallel zueinander im Abstand c von 50 bis 200 mm, vorzugsweise 100 bis 150 mm angeordnet sind. Alternativ kann das Gitter aus gewalztem Streckmetall 4 bestehen, dessen offene Fläche mindestens 60% betragen soll. Der elektrokatalytisch wirksame Teil ist bei 5 mit dem Gitter und bei 6 mit dem Rahmen verschweißt. Der Abstand a der parallel zueinander angeordneten Bänder 1 kann 5 bis 10 mm betragen, ihre Breite b 10 bis zu 200 mm.

## Beispiel

Es wurden Zellenspannung und Energieverbrauch bei konstanter Stromdichte und unterschiedlichen Bandbreiten des elektrokatalytisch wirksamen Teiles in einer versuchszelle gemessen. Das Stützgerüst bestand aus einem 1,3 mm dicken Nickelblech mit den Abmessungen 560 mm × 210 mm, das eine Ausnehmung von 500 mm × 78 mm aufwies. Die Bänder der folienartigen Gaselektrode waren parallel zu den Schmalseiten des Stützgerüstes angeordnet und mit seinen Längsseiten elektrisch leitend verschweißt. Diese Gaselektrode wurde als Kathode in einer vertikal betriebenen Membranelektrolysezelle so angeordnet, daß ihre Längsseite vertikal stand und ihre Bänder der Membran zugewandt waren. Der Abstand zwischen den Bändern und der Membran vom Typ Nafion[R] NX 90902 der Firma Dupont betrug 3 mm ; die Anode lag auf der Rückseite der Membran direkt an. Die Zelle wurde mit 33%iger Natronlauge im Umpump im Kathodenraum und mit gesättigter, gereinigter Natriumchloridlösung und einer Anolytkonzentration von 200 g NaCl/l im Ablauf bei 90°C und einer Stromdichte von 3 KA/m² bezogen auf die im Nickelblech ausgenommene Fläche von 390 cm² betrieben. Im Dauerbetrieb über jeweils mehrere Tage wurden für die Elektroden mit unterschiedlich breiten Bändern, deren Abstand untereinander jeweils 5 mm betrug, folgende Zellenspannungen und Energieverbrauch erreicht :

| Breite der Bänder [mm] | 10 | 25 | 100 |
|---|---|---|---|
| Zellspannung [V] | 3,24 | 3,16 | 3,07 |
| Energieverbrauch (Gleichstrom) [KWh/t NaOH] | 2,260 | 2,210 | 2,140 |

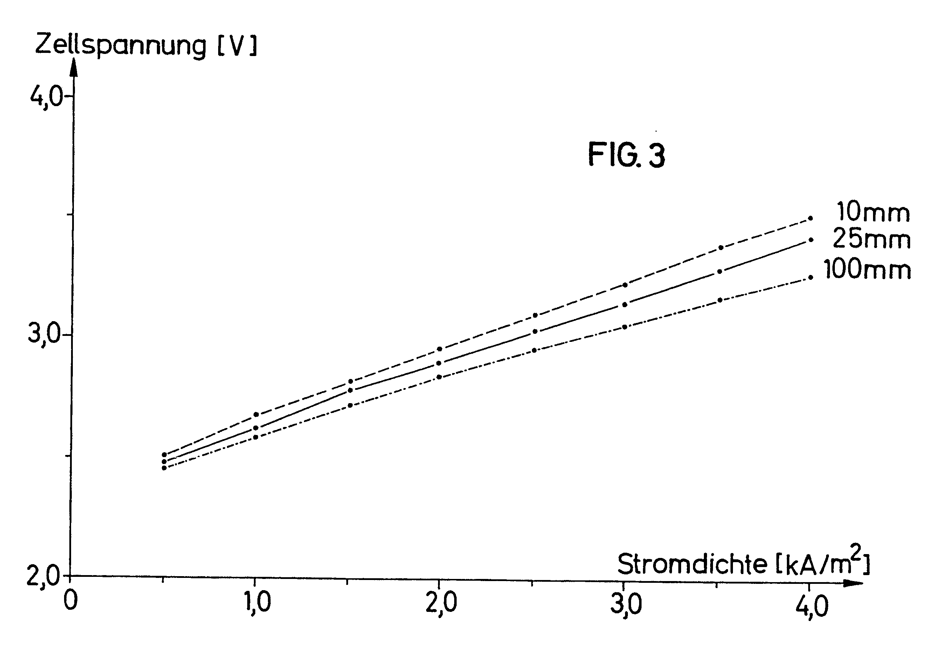

Zur Bestimmung der Charakteristik der drei verschiedenen Elektroden wurde die Zellspannung in Abhängigkeit von der Stromdichte im Bereich von 0,5 bis 4 kA/m² bestimmt. Die Ergebnisse sind in Fig. 3 graphisch dargestellt und zeigen, daß diese Gaselektroden auch bei 4 kA/m² noch im linearen Bereich arbeiten.

## Ansprüche

1. Poröse Gaselektrode mit elektrokatalytisch wirksamem Teil, bestehend aus einem Nickeldrahtnetz, das mindestens auf einer Seite von einem Gemisch aus Raney-Nickel und Polytetrafluorethylen bedeckt ist, dadurch gekennzeichnet, daß der elektrokatalytisch wirksame Teil aus Bändern besteht, die parallel und im Abstand zueinander auf einem elektrischen Strom leitenden Stützgerüst angeordnet sind, das Stützgerüst aus einem Rahmen besteht, der ein Gitter begrenzt, und das Gitter aus parallel angeordneten Streben besteht, deren Abstand zueinander höchstens 200 mm, vorzugsweise 100 bis 150 mm beträgt.

2. Poröse Gaselektrode nach Anspruch 1, dadurch gekennzeichnet, daß das Gitter aus Streckmetall mit mindestens 60% offener Fläche besteht.

3. Poröse Gaselektrode nach Anspruch 1, dadurch gekennzeichnet, daß die Bänder mit einer Breite von bis zu 200 mm in Abständen von 5 bis 10 mm zueinander mit dem Stützgerüst elektrisch leitend verbunden sind.

## Revendications

1. Electrode à gaz poreuse comportant une partie active du point de vue électrocatalytique, constituée par un réseau de fils de nickel, qui est recouvert, au moins sur une face, par un mélange formé de nickel de Raney et de polytétrafluoroéthylène, caractérisée en ce que la partie active du point de vue électrocatalytique est constituée par des bandes, qui sont disposées parallèlement et à distance les unes des autres sur une structure de support conduisant le courant électrique, qui est constitué par un cadre qui limite une grille, la grille étant constituée de barreaux parallèles, dont l'écartement est égal au maximum à 200 mm et est compris de préférence entre 100 et 150 mm.

2. Electrode à gaz poreuse suivant la revendication 1, caractérisée en ce que la grille est formée d'un métal déployé possédant une surface ouverte sur au moins 60%.

3. Electrode à gaz poreuse suivant la revendication 1, caractérisée en ce que les bandes possédant une largeur atteignant jusqu'à 200 mm est séparée par une distance comprise entre 5 et 10 mm sont reliées d'une manière électriquement conductrice à la structure de support.

## Claims

1. A porous gas electrode having an electrocatalytically active part comprising a nickel wire gauze which is covered, at least on one side, with a mixture of Raney nickel and polytetrafluoroethylene, wherein the electrocatalytically active part comprises strips which are arranged in parallel and at a distance from each other on an electrically conducting supporting framework, the supporting framework comprises a frame which forms the boundary of a grid, and the grid comprises struts arranged in parallel whose distance from each other is at most 200 mm, preferably 100 to 150 mm.

2. The porous gas electrode as claimed in claim 1, wherein the grid comprises expanded metal with an open area of at least 60%.

3. The porous gas electrode as claimed in claim 1, where in the strips having a width of up to 200 mm are connected in an electrically conducting manner to the supporting framework at distances of 5 to 10 mm from each other.

# FIG.1

FIG.2

EP 0 285 019 B1

FIG. 3

Zellspannung [V] (y-axis)

Stromdichte [kA/m²] (x-axis)

10mm
25mm
100mm

EP 0 285 019 B1